# EUROPÄISCHE PATENTANMELDUNG

(11) **EP 3 477 098 A1**
(43) Veröffentlichungstag der Anmeldung: **01.05.2019**
(21) Anmeldenummer: 18202008.1
(22) Anmeldetag: 23.10.2018
(51) Int. Cl.: F03D 7/04, F03D 7/02

(54) **VERFAHREN ZUM BETREIBEN EINER WINDENERGIEANLAGE UND STEUERUNG FÜR EINE WINDENERGIEANLAGE**

(30) Priorität: 26.10.2017 DE 102017009985
(71) Anmelder: Senvion GmbH, 22297 Hamburg (DE)
(72) Erfinder: Geisler, Jens, 24768 Rendsburg (DE); Frahm, Sebastian, 24808 Jevenstedt (DE)
(74) Vertreter: Glawe, Delfs, Moll

(57) **Zusammenfassung**

Verfahren zum Betreiben einer Windenergieanlage, bei dem ein prädiktiver Regler (23) ausgehend von einem Systemzustand der Windenergieanlage eine Trajektorie (27) für eine Stellgröße der Windenergieanlage berechnet und bei dem die Stellgröße der Windenergieanlage auf Basis eines Trajektoriewerts (35) eingestellt wird. Nach Eintreten eines ersten Sonderereignisses (T_{F}) berechnet der prädiktive Regler (23) eine Übergangstrajektorie (31), wobei die Übergangstrajektorie (31) unter der Annahme berechnet wird, dass ein zweites Sonderereignis (T_{E}) eintritt. Nach Eintritt des zweiten Sonderereignisses (T_{E}) wird die Stellgröße der Windenergieanlage auf Basis eines Übergangstrajektoriewerts (30) eingestellt. Die Erfindung betrifft außerdem eine zum Durchführen des Verfahrens geeignete Steuerung. Mit der Erfindung wird die Windenergieanlage in die Lage versetzt, nach der Klärung eines Netzfehlers schnell zu reagieren.

## Beschreibung

Die Erfindung betrifft ein Verfahren zum Betreiben einer Windenergieanlage, bei dem ein prädiktiver Regler ausgehend von einem Systemzustand der Windenergieanlage eine Trajektorie für eine Stellgröße der Windenergieanlage berechnet. Die Stellgröße der Windenergieanlage wird auf Basis eines Trajektoriewerts eingestellt. Die Erfindung betrifft außerdem eine Steuerung für eine Windenergieanlage.

Es ist bekannt, für die Steuerung einer Windenergieanlage einen prädiktiven Regler zu verwenden, WO 2016/023560A1, WO 2016/023561 A1. Das Berechnen der Trajektorie erfordert einen erheblichen Rechenaufwand, weswegen neue Trajektorien nur in zeitlichen Abständen zwischen 100 ms und 200 ms bereitgestellt werden können. Im Normalbetrieb einer Windenergieanlage sind solche zeitlichen Abstände akzeptabel.

Schwierigkeiten können sich im Falle eines Netzfehlers ergeben, beispielsweise wenn die Spannung im Netz einbricht. Nach der Klärung eines solchen Netzfehlers ist eine sehr zügige Reaktion der Windenergieanlage gefordert, damit das Netz wieder stabilisiert werden kann. In einer solchen Situation ist eine Verzögerungszeit bis zur Bereitstellung einer neuen Trajektorie von Nachteil.

Der Erfindung liegt die Aufgabe zugrunde, eine Steuerung und ein Verfahren zum Betreiben einer Windenergieanlage vorzustellen, so dass die Windenergieanlage bei Auftreten eines Sonderereignisses zügig reagieren kann. Die Aufgabe wird gelöst mit den Merkmalen der unabhängigen Ansprüche. Vorteilhafte Ausführungsformen sind in den Unteransprüchen angegeben.

Bei dem erfindungsgemäßen Verfahren berechnet der prädiktive Regler nach Eintreten eines ersten Sonderereignisses eine Übergangstrajektorie unter der Annahme, dass ein zweites Sonderereignis eintritt. Nach Eintritt des zweiten Sonderereignisses wird die Stellgröße der Windenergieanlage auf Basis eines Übergangstrajektoriewerts eingestellt.

Mit einem prädiktiven Regler wird ausgehend von einem Systemzustand zu einem aktuellen Zeitpunkt der Betriebszustand einer Windenergieanlage für einen zukünftigen Zeitraum geschätzt. Eine solche prädiktive Regelung kann ihre Vorzüge dann ausspielen, wenn in dem zukünftigen Zeitraum keine unerwarteten Ereignisse auftreten, wenn also der tatsächliche Zustand der Windenergieanlage in dem zukünftigen Zeitraum ungefähr so ist, wie es zum aktuellen Zeitpunkt geschätzt wurde. Tritt ein Sonderereignis auf, so ist eine Trajektorie, in der das Sonderereignis nicht berücksichtigt wurde, nur noch wenig hilfreich.

Ein üblicher prädiktiver Regler würde nach dem Auftreten eines Sonderereignisses, beispielsweise in Form eines Netzfehlers, eine neue Trajektorie berechnen, die den veränderten Systemzustand der Windenergieanlage und den Netzfehler berücksichtigt. Eine solche Trajektorie würde jedoch mit der Klärung des Netzfehlers hinfällig. Aus der Perspektive des prädiktiven Reglers ist die Klärung des Netzfehlers ein erneutes Sonderereignis, das in der Trajektorie nicht berücksichtigt werden konnte. Der prädiktive Regler würde also nach der Klärung des Netzfehlers den wiederum veränderten Systemzustand der Windenergieanlage und die Klärung des Netzfehlers zum Ausgangspunkt für die Berechnung noch einer weiteren Trajektorie nehmen. Bis allerdings diese Trajektorie berechnet wurde und in die Steuerung der Windenergieanlage einfließen konnte, ist einige Zeit nach der Klärung des Netzfehlers verstrichen. Gerade diese Phase unmittelbar nach der Klärung des Netzfehlers ist aber von großer Relevanz, um das Netz in einen stabilen Zustand zurückführen zu können.

Mit der Erfindung wird vorgeschlagen, unmittelbar nach dem Eintreten eines Netzfehlers eine Trajektorie zu berechnen, die für den Zeitraum nach der Klärung des Netzfehlers bestimmt ist. Dies geschieht dadurch, dass nach dem Auftreten des ersten Sonderereignisses eine Trajektorie berechnet wird unter der Annahme, dass ein zweites Sonderereignis eintritt. Tritt das zweite Sonderereignis dann tatsächlich auf, so steht ohne Verzögerung eine Trajektorie zur Verfügung, auf deren Basis die Windenergieanlage eingestellt werden kann.

Das erste Sonderereignis kann ein außerhalb der Grenzen des Normalbereichs liegender Betriebsparameter der Windenergieanlage sein und/oder ein außerhalb der Grenzen des Normalbereichs liegender Betriebsparameter des Anschlussnetzes sein, in das die elektrische Energie der Windenergieanlage eingespeist wird. Das zweite Sonderereignis kann die Rückkehr des Betriebsparameters in die Grenzen des Normalbereichs sein. In einer Ausführungsform sind das erste Sonderereignis das Auftreten eines Netzfehlers und das zweite Sonderereignis die Klärung des Netzfehlers. Klärung des Netzfehlers bedeutet, dass der Parameter des Netzes, der während des Fehlers außerhalb der Grenzen des Normalbetriebs liegt, in die Grenzen des Normalbetriebs zurückkehrt. Insbesondere kann der Netzparameter, der während des Netzfehlers außerhalb des Normalbereichs liegt, die Spannung sein. Zu den Größen, die den Systemzustand der Windenergieanlage kennzeichnen, gehören die Betriebsparameter der Windenergieanlage und die Betriebsparameter des Anschlussnetzes.

Der prädiktive Regler kann so gestaltet sein, dass ausgehend von einem aktuellen Zeitpunkt T₀ eine Trajektorie berechnet wird, die sich über k Zeitpunkte (Abtastpunkte) in die Zukunft erstreckt. Dabei sollte die Zeitspanne (Intervall) zwischen jeweils zwei benachbarten Zeitpunkten Tₙ und Tₙ₊₁ so gewählt werden, dass innerhalb einer Rechenphase zwischen Tₙ und Tₙ₊₁ eine Trajektorie berechnet werden kann. Eine Trajektorie ist demnach eine Folge von Trajektoriewerten, die sich vom aktuellen Zeitpunkt T₀ bis zu einem zukünftigen Zeitpunkt T_{K} erstreckt. Der jeweils erste Trajektoriewert einer Trajektorie dient als Basis, um die betreffende Stellgröße der Windenergieanlage in dem folgenden Intervall einzustellen.

Zu Beginn jedes neuen Intervalls stehen Daten über den tatsächlichen Systemzustand der Windenergieanlage im vorangegangenen Intervall zur Verfügung. Der prädiktive Regler erstellt in dem neuen Intervall eine weitere Trajektorie, die um ein Intervall nach hinten verschoben ist. Diese neue Trajektorie dient für das wiederum nachfolgende Intervall als Basis, um die Stellgröße der Windenergieanlage einzustellen. Der prädiktive Regler kann insbesondere als Modellprädiktive Regelung (Model Predictive Control, MPC, Receding Horizon Control) ausgestaltet sein.

Zu den Stellgrößen, auf die sich die Trajektorie beziehen kann, gehören das Drehmoment, welches dem Rotor durch das elektrische System entgegengesetzt wird, der Anstellwinkel eines oder mehrerer Rotorblätter (Pitchwinkel) und der Winkel, unter dem die Anlage zum Wind ausgerichtet ist (Azimutwinkel). Ebenfalls zu den Stellgrößen gehören von diesen Größen abgeleitete Größen, wie beispielsweise die Leistung der Windenergieanlage. Eine Trajektorie kann sich auf eine Stellgröße oder mehrere Stellgrößen der Windenergieanlage beziehen. Bezieht sich eine Trajektorie auf mehrere Stellgrößen, so kann ein Trajektoriewert als Vektor aufgefasst werden, der für jede Stellgröße einen Wert umfasst.

Ein Trajektoriewert ist ein Wert aus einer Folge von Trajektoriewerten, die gemeinsam die Trajektorie bilden. Wird eine Stellgröße der Windenergieanlage auf Basis des Trajektoriewerts eingestellt, so wird aus dem Trajektoriewert ein Sollwert und/oder ein Vorgabewert für die Stellgröße abgeleitet. Eine Ausführungsform, bei der der prädiktive Regler sowohl einen Sollwert als auch einen Vorsteuerwert liefert, ist als Zwei-Freiheitsgrade-Struktur bekannt.

Ein Vorgabewert kann unmittelbar in dem zugehörigen Stellglied der Windenergieanlage eingestellt werden oder einem Ausgangswert eines Reglers überlagert werden. Ein Sollwert kann einem unterlagerten Regler vorgegeben werden, der unter Berücksichtigung des Sollwerts und von Messwerten die Stellgröße regelt. Der Sollwert bzw. der Vorgabewert können aus einem einzelnen Trajektoriewert abgeleitet sein. Möglich ist auch, dass der Sollwert bzw. der Vorgabewert aus einer Mehrzahl von Trajektoriewerten oder aus einer Interpolation zwischen mehreren Trajektoriewerten abgeleitet sind.

Mit dem Eintritt des ersten Sonderereignisses kann der prädiktive Regler von einem ersten Betriebszustand in einen zweiten Betriebszustand wechseln. Im ersten Betriebszustand berechnet der prädiktive Regler ausgehend von einem tatsächlichen Systemzustand der Windenergieanlage eine Trajektorie. Im zweiten Betriebszustand berechnet der prädiktive Regler ausgehend von einem modifizierten aktuellen Systemzustand eine Übergangstrajektorie. Der Systemzustand kann sich aus gemessenen, berechneten und/oder geschätzten Betriebsparametern zusammensetzen und den tatsächlichen Zustand der Windenergieanlage repräsentieren. Im zweiten Betriebszustand des prädiktiven Reglers wird der Systemzustand modifiziert, indem für wenigstens einen Betriebsparameter ein alternativer Wert anstatt des tatsächlichen Werts verwendet wird. So kann beispielsweise im Falle eines Netzfehlers anstatt der tatsächlich gemessenen Spannung ein hypothetischer Wert für die Spannung verwendet werden, der höher ist als der gemessene Wert. Der hypothetische Wert kann beispielsweise der unteren Grenze des Normalbetriebs entsprechen, während die tatsächliche Spannung darunter und damit außerhalb der Grenzen des Normalbetriebs liegt.

Nach dem Eintritt des zweiten Sonderereignisses kann der prädiktive Regler in den ersten Betriebszustand zurückkehren. Insbesondere kann die Rückkehr in den ersten Betriebszustand dadurch ausgelöst werden, dass der tatsächliche Wert des Betriebsparameters dem hypothetischen Wert des Betriebsparameters entspricht. Kehrt also beispielsweise nach Klärung des Netzfehlers die Spannung wieder in den Normalbereich zurück, so kann der prädiktive Regler die nächste Trajektorie wieder anhand des tatsächlichen Systemzustands berechnen, anstatt des modifizierten Systemzustands. Hat beispielsweise nach einem Netzfehler die Spannung zwischen zwei Zeitpunkten Tₙ₋₁ und Tₙ wieder die Grenze des Normalbereichs erreicht, so kann zum Zeitpunkt Tₙ die Stellgröße der Windenergieanlage auf Basis der zum Zeitpunkt Tₙ₋₁ berechneten Übergangstrajektorie eingestellt werden. Zwischen den Zeitpunkten Tₙ und Tₙ₊₁ wird die erste Trajektorie nach dem Ende des Netzfehlers berechnet und zum Zeitpunkt Tₙ₊₁ die Stellgröße der Windenergieanlage auf Basis eines Trajektoriewerts dieser ersten Trajektorie eingestellt.

Eine Übergangstrajektorie, die nach dem Eintritt des ersten Sonderereignisses und vor Eintritt des zweiten Sonderereignisses berechnet wurde, kann verworfen werden. Diese Übergangstrajektorie wird dann nicht herangezogen, um eine Stellgröße der Windenergieanlage einzustellen. Dies kommt insbesondere dann in Betracht, wenn der Netzfehler länger andauert, so dass während des Netzfehlers bereits eine nachfolgende Übergangstrajektorie berechnet werden kann. Außerdem kann eine Übergangstrajektorie verworfen werden, wenn der Netzfehler während der Berechnung der Übergangstrajektorie geklärt wird und die Stellgröße der Windenergieanlage auf Basis einer zuvor berechneten Übergangstrajektorie eingestellt wird.

In der Phase zwischen dem ersten Sonderereignis und dem zweiten Sonderereignis kann die Stellgröße der Windenergieanlage nach den Vorgaben eines Kurzzeitreglers eingestellt werden. In einer Ausführungsform ist der Kurzzeitregler unabhängig von dem prädiktiven Regler. Mit anderen Worten ermittelt der Kurzzeitregler die Vorgabe für die Stellgröße der Windenergieanlage, ohne dass eine von dem prädiktiven Regler erzeugte Trajektorie berücksichtigt wird. Der Kurzzeitregler kann das Regelungsziel haben, das Drehmoment des elektrischen Systems, das dem Rotor entgegengesetzt wird, konstant zu halten. Möglich ist, dass der Kurzzeitregler das Regelungsziel hat, das Drehmoment des elektrischen Systems in einer Weise zu variieren, die einer Schwingung des Triebstrangs entgegenwirkt. Dieses Regelungsziel kann insbesondere in der Zeitspanne zwischen dem ersten Sonderereignis und dem zweiten Sonderereignis anwendbar sein.

Der Kurzzeitregler kann zusätzlich oder alternativ dazu das Regelungsziel haben, nach dem zweiten Sonderereignis das elektrische Drehmoment der Windenergieanlage zu erhöhen. Der prädiktive Regler kann dann eine Übergangstrajektorie berechnen, die bei einem erhöhten Drehmoment beginnt, so dass die Windenergieanlage schneller in den Normalbetrieb zurückgeführt werden kann. Der Beginn der Übergangstrajektorie kann einen Übergabepunkt bilden, der von dem Kurzzeitregler angesteuert wird.

Möglich ist auch, dass der Kurzzeitregler eine Abhängigkeit von dem prädiktiven Regler aufweist. Beispielsweise kann der prädiktive Regler in einer ersten Rechenphase nach dem ersten Sonderereignis noch eine letzte Trajektorie berechnen, die von dem tatsächlichen Systemzustand ausgeht. Erst in den nachfolgenden Rechenphasen wird eine Übergangstrajektorie berechnet, die von einem modifizierten Systemzustand ausgeht. Aus der letzten Trajektorie können Sollwerte für die Stellgröße abgeleitet werden, die für die Phase zwischen dem ersten Sonderereignis und dem zweiten Sonderereignis gelten. Die Sollwerte der letzten Trajektorie können also für mehrere Rechenphasen Gültigkeit haben. Im Unterschied dazu wird im sonstigen Betrieb des prädiktiven Reglers nach jeder Rechenphase eine neue Trajektorie bereitgestellt, die die vorangegangene Trajektorie ersetzt.

Möglich ist auch, dass bei dem erfindungsgemäßen Verfahren ein erster prädiktiver Regler und ein zweiter prädiktiver Regler verwendet werden. Der erste prädiktive Regler kann dazu ausgelegt sein, in der Phase zwischen dem ersten Sonderereignis und dem zweiten Sonderereignis eine Übergangstrajektorie zu berechnen. Der zweite prädiktive Regler kann dazu ausgelegt sein, in der Phase zwischen dem ersten Sonderereignis und dem zweiten Sonderereignis eine Trajektorie für den Kurzzeitregler zu berechnen. In dem zweiten prädiktiven Regler kann ein Modell implementiert sein, das im Vergleich zu dem ersten prädiktiven Regler vereinfacht ist.

In einer Ausführungsform ist der zweite prädiktive Regler dazu ausgelegt, in der Phase vor dem ersten Sonderereignis eine hypothetische Fehlertrajektorie zu berechnen. Der zweite prädiktive Regler arbeitet also im Normalzustand der Windenergieanlage mit einem modifizierten Systemzustand, gemäß dem beispielsweise von einem Eintritt eines Spannungseinbruchs ausgegangen wird. Kommt es dann tatsächlich zu einem Spannungseinbruch, steht die zugehörige Fehlertrajektorie bereits zur Verfügung. Die Stellgröße der Windenergieanlage kann auf Basis eines Fehlertrajektoriewerts eingestellt werden. Der erste prädiktive Regler, dessen Trajektorie mit dem Spannungseinbruch hinfällig geworden ist, kann die Übergangstrajektorie berechnen.

Die Abtastpunkte der von dem prädiktiven Regler berechneten Trajektorie können äquidistant sein, so dass zwischen zwei benachbarten Abtastpunkten jeweils ein identisches zeitliches Intervall liegt. Das zeitliche Intervall kann so bemessen sein, dass es ausreicht, um aus zum Beginn des Intervalls vorliegenden Messwerten den Systemzustand der Windenergieanlage zu schätzen und ausgehend von den Systemzustand eine Trajektorie zu berechnen. Möglich ist auch, dass die Länge der Intervalle variiert, beispielsweise indem in weiterer Zukunft liegende Intervalle eine größere Länge haben als in näherer Zukunft liegende Intervalle.

Die Abtastpunkte der Übergangstrajektorie können den Abtastpunkten der Trajektorie entsprechen. Die Folge von Intervallen wird dann durch den Eintritt des ersten Sonderereignisses oder des zweiten Sonderereignisses nicht verändert. In einer Ausführungsform werden die Abtastpunkte der Übergangstrajektorie initialisiert. Insbesondere kann ein Abtastpunkt der Übergangstrajektorie relativ zu der normalen Folge von Abtastpunkten nach vorne oder nach hinten verschoben sein. Die Initialisierung der Abtastpunkte kann durch das erste Sonderereignis und/oder durch das zweite Sonderereignis ausgelöst sein. Die Initialisierung kann beispielsweise so gestaltet sein, dass ein Abtastpunkt der Übergangstrajektorie so kurz wie möglich nach dem zweiten Sonderereignis liegt. Damit kann die Verzögerung kurz gehalten werden, nach der die Steuerung der Windenergieanlage an die Übergangstrajektorie übergeben wird. Möglich ist auch ein Abtastpunkt unmittelbar nach dem ersten Sonderereignis, so dass ohne Verzug mit der Berechnung der Übergangstrajektorie begonnen werden kann.

Die Erfindung betrifft auch eine Steuerung für eine Windenergieanlage. Die Steuerung umfasst einen prädiktiven Regler, der dazu ausgelegt ist, ausgehend von einem Systemzustand der Windenergieanlage eine Trajektorie für eine Stellgröße der Windenergieanlage zu berechnen. Die Steuerung ist dazu ausgelegt, ein Steuersignal zu erzeugen, um die Stellgröße der Windenergieanlage auf Basis eines Trajektoriewerts einzustellen. Der prädiktive Regler ist dazu ausgelegt, nach Eintreten eines ersten Sonderereignisses eine Übergangstrajektorie zu berechnen, wobei die Übergangstrajektorie unter der Annahme berechnet wird, dass ein zweites Sonderereignis eintritt. Die Steuerung ist dazu ausgelegt, nach Eintritt des zweiten Sonderereignisses ein Steuersignal erzeugt, um die Stellgröße der Windenergieanlage auf Basis eines Übergangstrajektoriewerts einzustellen. Die Erfindung betrifft außerdem eine Windenergieanlage, die eine solche Steuerung umfasst und/oder die unter Kontrolle einer solchen Steuerung betrieben wird.

Die Steuerung kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang der erfindungsgemäßen Steuerung beschrieben sind.

Die Erfindung wird nachfolgend unter Bezugnahme auf die beigefügten Zeichnungen anhand vorteilhafter Ausführungsformen beispielhaft beschrieben. Es zeigen:
Fig. 1: eine schematische Darstellung einer erfindungsgemäßen Windenergieanlage;
Fig. 2: eine Steuerung einer Windenergieanlage bei einer ersten Ausführungsform der Erfindung;
Fig. 3: die Ansicht gemäß Fig. 2 bei einer anderen Ausführungsform der Erfindung;
Fig. 4: eine Trajektorie im Normalbetrieb der Windenergieanlage;
Fig. 5 bis 10: Beispiele für Trajektorien im Fehlerfall.

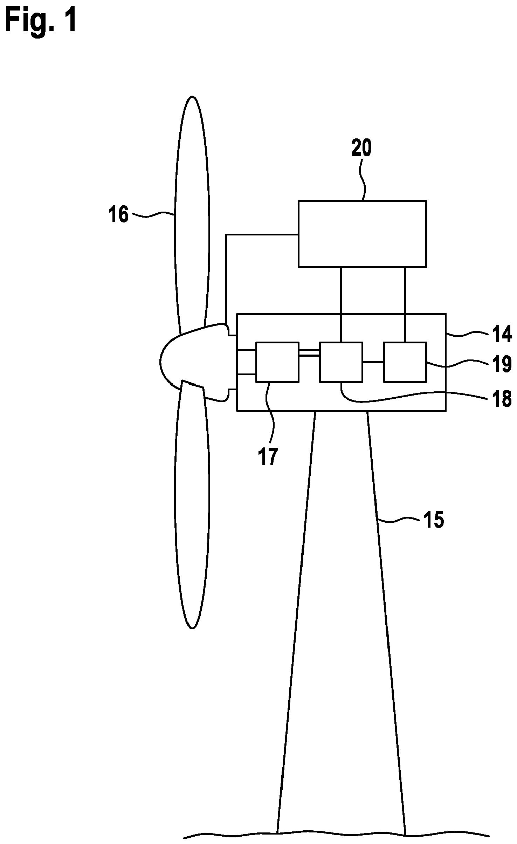

Bei einer in Fig. 1 gezeigten Windenergieanlage ist eine Gondel 14 drehbar auf einem Turm 15 gelagert. Die Gondel trägt einen Rotor 16, der durch den Wind in Drehung versetzt wird. Der Rotor ist über ein Getriebe 17 an einen Generator 18 angeschlossen, der bei einer Drehung des Rotors 16 elektrische Energie erzeugt. Über einen Umrichter 19 wird die elektrische Energie in ein in Fig. 1 nicht dargestelltes Anschlussnetz eingespeist.

Eine Steuerung 20 macht Vorgaben für den Betrieb der Windenergieanlage. Die Vorgaben betreffen Stellgrößen der Windenergieanlage, zu denen insbesondere der Pitchwinkel der Rotorblätter sowie den Einstellungen des Generators 18 und des Umrichters 19 gehören. Der Generator 18 und der Umrichter 19 bilden gemeinsam ein elektrisches System, das dem Rotor ein Drehmoment entgegensetzt.

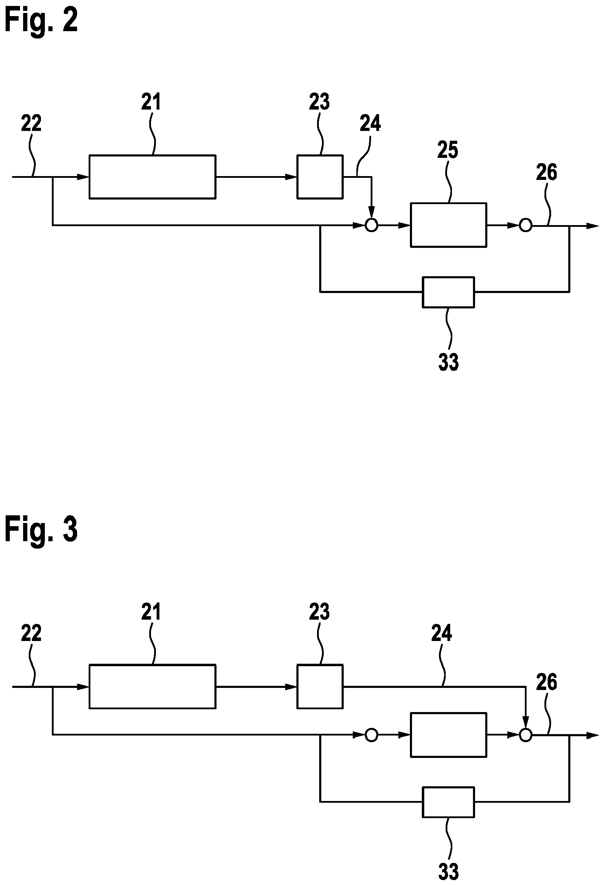

Die Steuerung 20 umfasst gemäß Fig. 2 einen Zustandsschätzer 21, der ausgehend von Messwerten 22 den Systemzustand der Windenergieanlage ermittelt. Einige Parameter, die den Systemzustand der Windenergieanlage kennzeichnen, sind einer direkten Messung zugänglich. Andere Parameter werden anhand der zugänglichen Messwerte geschätzt.

Die Information über den Systemzustand wird einem prädiktiven Regler 23 zugeführt, der ausgehend vom aktuellen Systemzustand eine in die Zukunft gerichtete Trajektorie für die Stellgrößen der Windenergieanlage berechnet. Die Trajektorie gibt einen Verlauf der Stellgrößen an, der anhand eines in dem prädiktiven Regler 23 hinterlegten Zustandsmodels der Windenergieanlage und unter Berücksichtigung eines bestimmten Gütekriteriums ein optimales Ergebnis liefert.

Ein Trajektoriewert 24 wird den Eingang eines unterlagerten Reglers 25 als Sollwert zugeführt. Der unterlagerte Regler 25 verarbeitet den Trajektoriewert 24 sowie die Messwerte 22 und ermittelt daraus eine Vorgabe 26 für den Pitchwinkel der Rotorblätter und die Einstellungen des elektrischen Systems 18, 19. Über Stellglieder werden die betreffenden Parameter der Windenergieanlage gemäß den Vorgaben 26 des unterlagerten Reglers 25 eingestellt.

Im Fehlerfall, also beispielsweise bei einem Spannungseinbruch im Netz, übernimmt ein Kurzzeitregler 33 die Kontrolle über die Windenergieanlage. Der prädiktive Regler 23 wird genutzt, um eine Übergangstrajektorie zu berechnen, mit der die Windenergieanlage nach der Klärung des Fehlers zurück zum Normalbetrieb geführt wird. Da bereits die Phase während des Fehlers für die Berechnung der Übergangstrajektorie genutzt wird, kann nach Fehlerklärung die Kontrolle über die Windenergieanlage ohne Verzug wieder an den prädiktiven Regler 23 übergeben werden.

Bei der alternativen Ausführungsform gemäß Fig. 3 wird der Trajektoriewert 24 im Wege einer Vorsteuerung dem Ausgangssignal des unterlagerten Reglers 25 überlagert. Bei einer weiteren Alternative liefert der prädiktive Regler sowohl einen Sollwert als auch einen Vorsteuerwert (Zwei-Freiheitsgrade-Struktur)

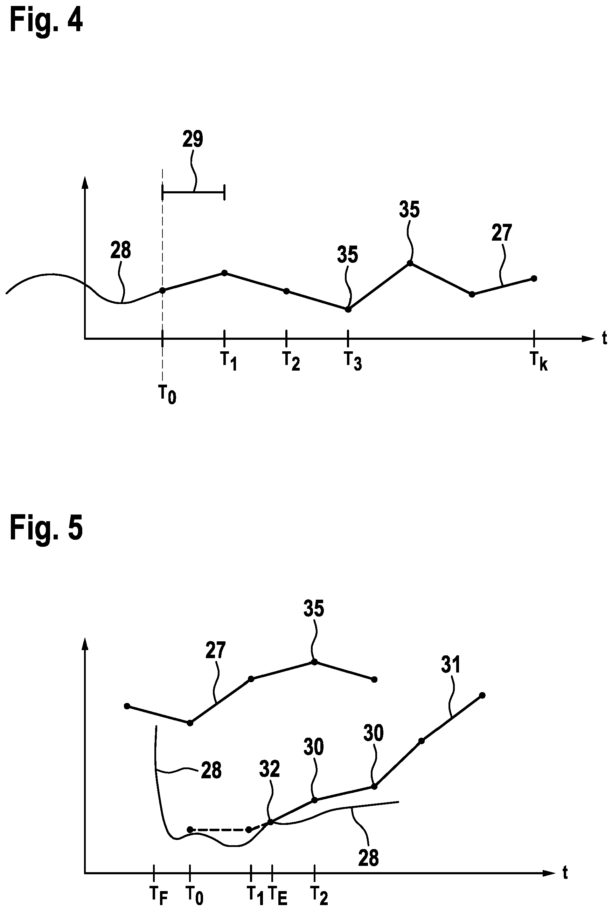

In Fig. 4 ist eine über der Zeit t aufgetragene Trajektorie 27 für das Drehmoment des elektrischen Systems 18, 19 aufgetragen, die der prädiktive Regler 23 berechnet hat. Bis zu einem Zeitpunkt T₀ liegen Messwerte über den tatsächlichen Verlauf 28 des elektrischen Drehmoments der Windenergieanlage vor. Zum Zeitpunkt T₀ beginnt eine Rechenphase 29, die sich bis zu einem Zeitpunkt T₁ erstreckt. In einem ersten Abschnitt der Rechenphase 29 schätzt der Zustandsschätzer 21 einen Systemzustandsvektor, der dem prädiktiven Regler 21 zugeführt wird. Im zweiten Abschnitt der Rechenphase 29 berechnet der prädiktive Regler 23 ausgehend von dem Systemzustandsvektor die Trajektorie 27, die sich von dem Zeitpunkt T₁ bis zu einem zukünftigen Zeitpunkt TK erstreckt. Die Trajektorie 27 ist zusammengesetzt aus Abtastpunkten 35, wobei der zeitliche Abstand zweier benachbarter Abtastpunkte 35 wenigstens so groß ist wie die Länge der Rechenphase 29. Zwischen zwei benachbarten Abtastpunkten 35 wird die Trajektorie 27 jeweils linear interpoliert. Insgesamt kann die Trajektorie 27 sich beispielsweise über 200 Intervalle in die Zukunft erstrecken.

Zum Zeitpunkt T₁ ist die Berechnung der Trajektorie 27, die sich vom Zeitpunkt T₁ bis zum Zeitpunkt T_{K} erstreckt, beendet. Der unterlagerte Regler 25 regelt zwischen den Zeitpunkten T₁ und T₂ anhand des Verlaufs der Trajektorie 27 zwischen den Zeitpunkten T₁ und T₂.

Der weitere Verlauf der Trajektorie 27 nach dem Zeitpunkt T₂ hat keinen Einfluss auf die Stellgrößen der Windenergieanlage. Zum Zeitpunkt T₁ liegen Messwerte aus dem Intervall zwischen T₀ und T₁ vor. Auf Basis dieser Messwerte wird im Intervall zwischen T₁ und T₂ eine neue Trajektorie berechnet, die zwischen den Zeitpunkten T₂ und T₃ den Verlauf der Stellgröße vorgibt.

Bei den Ausführungsbeispiel gemäß Fig. 5 kommt es zum Zeitpunkt T_{F} zu einem Spannungseinbruch im Netz. Die Spannung kann beispielsweise auf 50 % der Nominalspannung absinken und damit deutlich außerhalb der Grenzen des Normalbereichs liegen. Mit dem Spannungseinbruch fällt das Drehmoment schnell ab, wodurch sich der tatsächliche Verlauf 28 des Drehmoments schnell von dem mit der Trajektorie 27 vorhergesagten Verlauf entfernt. Die Windenergieanlage schaltet auf einen einfachen Kurzzeitregler 33 um, der sich darauf beschränkt, das Drehmoment konstant zu halten und Schwingungen im Triebstrang entgegenzuwirken. Der Spannungseinbruch zum Zeitpunkt T_{F} ist ein erstes Sonderereignis im Sinne der Erfindung.

Zwischen dem Zeitpunkt T₀ und dem Zeitpunkt T₁ berechnet der prädiktive Regler 23 eine Übergangstrajektorie 31, die sich aus einer Mehrzahl von an den Zeitpunkt T₁ anschließenden Abtastpunkten 30 besteht. Die Übergangstrajektorie 31 beruht auf einem modifizierten Systemzustand, bei dem davon ausgegangen wird, dass der Netzfehler zum Zeitpunkt T₁ geklärt ist, die Spannung also die untere Grenze des Normalbereichs wieder erreicht hat. Abgesehen von dieser Modifikation entspricht der modifizierte Systemzustand den zum Zeitpunkt T₀ vorliegenden tatsächlichen Messwerten.

Tatsächlich wird der Fehler erst zu einem Zeitpunkt T_{E} im Intervall zwischen T₁ und T₂ geklärt. Unmittelbar nach dem Fehlerende T_{E} geht die Kontrolle über die Windenergieanlage an einem Übergabepunkt 32 wieder an den prädiktiven Regler 23 über. Die Fehlerklärung ist ein zweites Sonderereignis im Sinne der Erfindung.

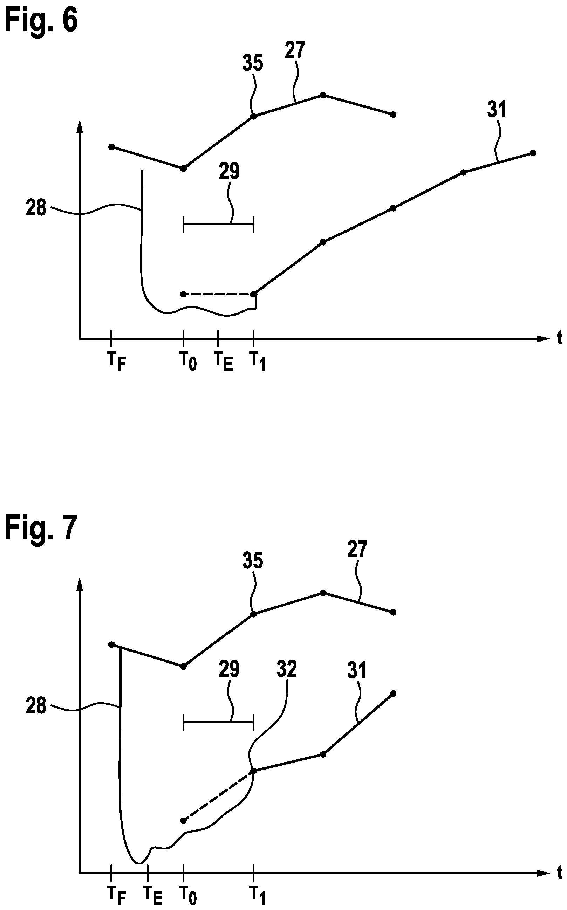

In Fig. 6 tritt der Netzfehler mit dem Spannungseinbruch zum Zeitpunkt T_{F} auf. Zum Zeitpunkt T_{E} ist der Netzfehler wieder geklärt. Zum Zeitpunkt T₀ beginnt die Rechenphase 29, in der die Übergangstrajektorie 31 berechnet wird. Der Zeitpunkt T₁, zudem die Trajektorie 31 zur Verfügung steht, liegt nach dem Zeitpunkt des Fehlerendes TE. Es gibt eine Phase zwischen den Zeitpunkten T_{E} und T₁, in der die Windenergieanlage trotz Fehlerklärung noch unter der Kontrolle des Kurzzeitreglers 33 betrieben wird und damit suboptimal reagiert. Erst ab dem Zeitpunkt T₁ steht die Übergangstrajektorie 31 zur Verfügung, mit der die Windenergieanlage zurück in den Normalbetrieb geführt wird.

Gemäß Fig. 7 ist auch die Konstellation möglich, dass der Fehler zum Zeitpunkt T_{E} bereits geklärt ist, bevor die erste Rechenphase 29 nach dem Fehlereintritt beginnt. Die Phase, zwischen den Zeitpunkten T_{E} und T₁, in der die Windenergieanlage unter der Kontrolle des Kurzzeitreglers 33 suboptimal gesteuert ist, ist dann länger als die Rechenphase 29. Der Kurzzeitregler 33 kann so ausgelegt sein, dass die Phase zwischen T_{E} und T₁ genutzt wird, um die Windenergieanlage zu einem Übergabepunkt 32 zu führen, an den sich die Übergangstrajektorie 31 anschließen kann.

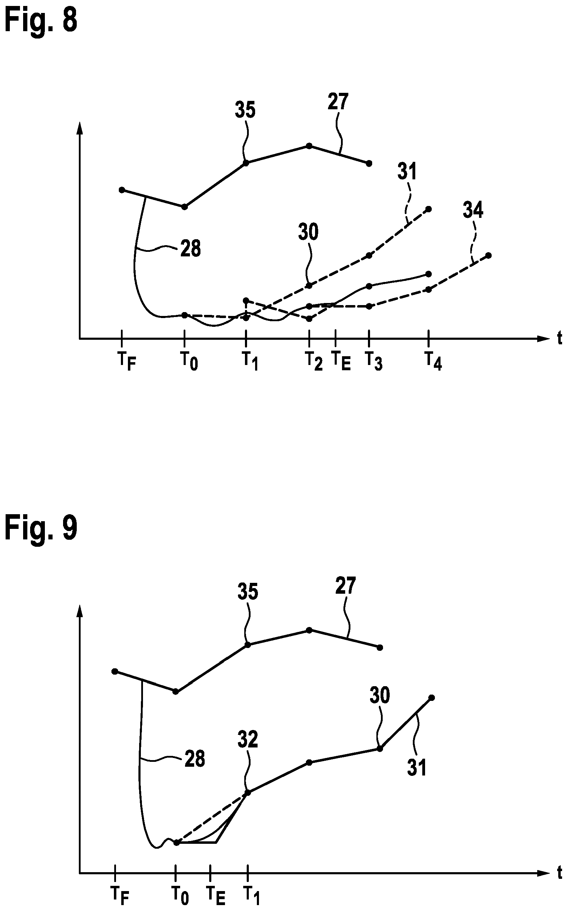

Bei der Ausführungsform gemäß Fig. 8 dauert der zum Zeitpunkt T_{F} eintretende Fehler länger an und wird erst im Intervall T₂, T₃ geklärt (Zeitpunkt T_{E}). In der Rechenphase im ersten Intervall zwischen den Zeitpunkten T₀ und T₁ berechnet der prädiktive Regler 23 eine erste Übergangstrajektorie 31. Da der Fehler zum Zeitpunkt T₁ noch nicht geklärt ist, wird die erste Übergangstrajektorie 31 verworfen. Im zweiten Intervall zwischen den Zeitpunkten T₁ und T2 wird eine zweite Übergangstrajektorie 34 berechnet. Da zum Zeitpunkt T₂ der Fehler immer noch nicht geklärt ist, wird zwischen den Zeitpunkten T₂ und T₃ eine dritte Übergangstrajektorie berechnet, die in Fig. 8 nicht dargestellt ist. Zwischen den Zeitpunkten T₂ und T₃ kommt es zur Fehlerklärung, woraus sich nachträglich ergibt, dass die zweite Übergangstrajektorie 34 doch verwendet werden kann. Die dritte Übergangstrajektorie wird verworfen. Die weitere Steuerung der Windenergieanlage erfolgt gemäß der zweiten Übergangstrajektorie 34. Zwischen den Zeitpunkten T₃ und T₄ berechnet der prädiktive Regler 23 mit einem Intervall Verzögerung die Fortsetzung der zweiten Übergangstrajektorie 34.

In Fig. 9 erfolgt die Fehlerklärung T_{E} zwischen den Zeitpunkten T₀ und T₁. Die im Intervall zwischen T₀ und T₁ berechnete Übergangstrajektorie 31 steht ab dem Zeitpunkt T₁ zur Verfügung. Die Übergangstrajektorie 31 wird in dieser Ausführungsform unter der Annahme berechnet, dass parallel zu der nach der Fehlerklärung ansteigenden Spannung auch das Drehmoment des elektrischen Systems 18, 19 wieder erhöht wurde. Der Kurzzeitregler 33 hat die Aufgabe, das Drehmoment des elektrischen Systems 18, 19 zwischen den Zeitpunkten T_{E} und T₁ gegenüber dem minimalen Drehmoment während des Fehlers deutlich anzuheben, so dass an einem Übergabepunkt 32 eine nahtlose Übergabe an die Übergangstrajektorie 31 erfolgen kann.

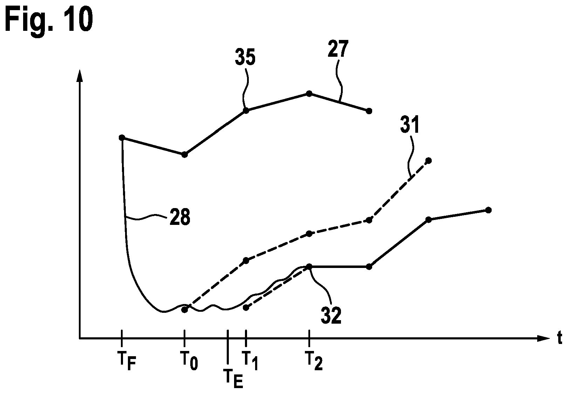

Bei der Ausführungsform gemäß Fig. 10 geht der prädiktive Regler 23 ähnlich wie in Fig. 9 davon aus, dass die Übergangstrajektorie 31 mit einem Drehmoment beginnen kann, dass gegenüber dem minimalen Drehmoment während des Fehlers deutlich erhöht ist. Liegt zwischen der Fehlerklärung T_{E} und dem Beginn der Übergangstrajektorie 31 zum Zeitpunkt T₁ nur eine sehr kurze Zeitspanne, so käme der Übergang vom Systemzustand zum Zeitpunkt T_{E} zu dem mit der Übergangstrajektorie 31 für den Zeitpunkt T₁ angenommenen Drehmoment einem Sprung gleich. Der Beginn der Übergangstrajektorie 31 wird deswegen um ein Intervall auf den Zeitpunkt T₂ verschoben. Der Kurzzeitregler 33 kann das Intervall zwischen T₁ und T₂ nutzen, um die Windenergieanlage zum Übergabepunkt 32 zu führen.

## Patentansprüche

1. Verfahren zum Betreiben einer Windenergieanlage, bei dem ein prädiktiver Regler (23) ausgehend von einem Systemzustand der Windenergieanlage eine Trajektorie (27) für eine Stellgröße der Windenergieanlage berechnet und bei dem die Stellgröße der Windenergieanlage auf Basis eines Trajektoriewerts (35) eingestellt wird, wobei nach Eintreten eines ersten Sonderereignisses (T_{F}) der prädiktive Regler (23) eine Übergangstrajektorie (31) berechnet, wobei die Übergangstrajektorie (31) unter der Annahme berechnet wird, dass ein zweites Sonderereignis (T_{E}) eintritt, und wobei nach Eintritt des zweiten Sonderereignisses (T_{E}) die Stellgröße der Windenergieanlage auf Basis eines Übergangstrajektoriewerts (30) eingestellt wird.

2. Verfahren nach Anspruch 1, **dadurch gekennzeichnet, dass** das erste Sonderereignis (T_{F}) ein außerhalb der Grenzen des Normalbereichs liegender Betriebsparameter der Windenergieanlage und/oder des Anschlussnetzes ist.

3. Verfahren nach Anspruch 2, **dadurch gekennzeichnet, dass** das zweite Sonderereignis (T_{E}) eine Rückkehr des Betriebsparameters in den Normalbereich ist.

4. Verfahren nach einem der Ansprüche 1 bis 3, **dadurch gekennzeichnet, dass** der prädiktive Regler (23) als Modellprädiktive Regelung (Model predictive control, MPC, Receding Horizon Control) ausgestaltet ist.

5. Verfahren nach einem der Ansprüche 1 bis 4, **dadurch gekennzeichnet, dass** die Stellgröße ein Drehmoment des elektrischen Systems der Windenergieanlage und/oder ein Pitchwinkel eines oder mehrerer Rotorblätter der Windenergieanlage ist.

6. Verfahren nach einem der Ansprüche 1 bis 5, **dadurch gekennzeichnet, dass** die Übergangstrajektorie (31) ausgehend von einem modifizierten Systemzustand berechnet wird.

7. Verfahren nach Anspruch 6, **dadurch gekennzeichnet, dass** in dem modifizierten Systemzustand eine Netzspannung angenommen wird, die höher ist als die gemessene Netzspannung.

8. Verfahren nach einem der Ansprüche 1 bis 7, **dadurch gekennzeichnet, dass** eine oder mehrere von dem prädiktiven Regler (23) berechnete Übergangstrajektorien (23) verworfen werden.

9. Verfahren nach einem der Ansprüche 1 bis 8, dass in der Phase zwischen dem ersten Sonderereignis (T_{F}) und dem zweiten Sonderereignis (T_{E}) die Stellgröße der Windenergieanlage nach den Vorgaben eines Kurzzeitreglers (33) eingestellt wird.

10. Verfahren nach Anspruch 9, **dadurch gekennzeichnet, dass** der Kurzzeitregler das Regelungsziel hat, zwischen dem ersten Sonderereignis (T_{F}) und dem zweiten Sonderereignis (T_{E}) das elektrische Drehmoment der Windenergieanlage konstant zu halten und/oder einer Schwingung des Triebstrangs entgegenzuwirken.

11. Verfahren nach Anspruch 9 oder 10, **dadurch gekennzeichnet, dass** der Kurzzeitregler das Regelungsziel hat, nach dem zweiten Sonderereignis (T_{E}) das elektrische Drehmoment der Windenergieanlage zu erhöhen.

12. Verfahren nach einem der Ansprüche 1 bis 11, **dadurch gekennzeichnet, dass** mit dem Eintritt des ersten Sonderereignisses (T_{F}) oder des zweiten Sonderereignisses (T_{E}) ein Abtastpunkt der Übergangstrajektorie initialisiert wird.

13. Steuerung für eine Windenergieanlage, mit einem prädiktiven Regler (23), der ausgehend von einem Systemzustand der Windenergieanlage eine Trajektorie (27) für eine Stellgröße der Windenergieanlage berechnet, wobei die Steuerung dazu ausgelegt ist, ein Steuersignal (26) zu erzeugen, um die Stellgröße der Windenergieanlage auf Basis eines Trajektoriewerts (35) einzustellen, wobei der prädiktive Regler (23) nach Eintreten eines ersten Sonderereignisses (T_{F}) eine Übergangstrajektorie (31) berechnet, wobei die Übergangstrajektorie (31) unter der Annahme berechnet wird, dass ein zweites Sonderereignis (T_{E}) eintritt, und wobei die Steuerung nach Eintritt des zweiten Sonderereignisses (T_{E}) ein Steuersignal (26) erzeugt, um die Stellgröße der Windenergieanlage auf Basis eines Übergangstrajektoriewerts (30) einzustellen.
